# EUROPEAN PATENT APPLICATION

(11) **EP 1 070 897 A2**
(43) Date of publication of application: **24.01.2001**
(21) Application number: 00114496.3
(22) Date of filing: 06.07.2000
(51) Int. Cl.: F16L 21/035

(54) **A sealing device for pipes**

(30) Priority: 22.07.1999 DE 19934363
(71) Applicant: Forsheda GmbH, 63477 Maintal (DE)
(72) Inventor: Nilsson, Ulf, 331 50 Värnamo (SE)
(74) Representative: Linde, Leif

(57) **Abstract**

A sealing device for pipes comprises two sealing surfaces (2, 4) provided at the end portions of two pipes. The sealing surfaces are axially introducable one into the other for providing a pipe joint in which one sealing surface surrounds the other sealing surface for providing a substantially cylindrical sealing space. Elastic material sealing elements (10, 12) are compressed in the sealing space between the sealing surfaces. The sealing elements constitute separate elements, a sealing ring (10) and a sliding skin (12), and the sealing ring (10) is compressed between one sealing surface (4) and the sliding skin (12) in the established pipe joint.

## Description

A prior art sealing device for pipes comprises two sealing surfaces provided at the end portions of two pipes, the sealing surfaces being axially introducable one into the other for providing a pipe joint in which one sealing surface surrounds the other sealing surface for constituting a substantially cylindrical sealing space. The sealing device comprises also elastic material sealing elements compressed in the sealing space between the sealing surfaces. The axial introduction of the sealing surfaces one into the other for providing the pipe joint provides for a compression of the sealing elements between the sealing surfaces. This compression of the sealing elements has the object of providing that the sealing elements are subsequently to establishment of the pipe joint forced against the sealing surfaces with sufficient pressure so as to provide a tight joint. The compression of the sealing elements taking place at the axial introduction of the sealing surfaces one into the other provides that the sealing elements are subjected to forces which at the introduction of the sealing surfaces one into the other can provide that the sealing elements are displaced from their correct sealing position. A further drawback is that the mounting forces are great.

The object of the invention is to provide a sealing device for pipes in which the sealing elements maintain their correct position in the joint during the axial introduction of the sealing surfaces one into the other and in which the mounting forces are smaller than in prior art sealing devices.

In order to comply with this object the sealing device according to the invention is characterized in that the sealing elements comprise separate elements, namely a sealing ring and a sliding skin, the sealing ring being compressed between one sealing surface and the sliding skin in the established pipe joint.

In a preferred embodiment the pipe end portions are constituted by a socket and a spigot end on which the sealing surfaces are provided. It is also preferred that the sealing ring and the sliding skin are prior to the axial introduction of the sealing surfaces one into the other positioned on the sealing surface of the spigot end. This provides for small mounting forces and correct positions of the sealing elements in the pipe joint as the sealing elements slide against each other at low friction without any sliding between the sealing elements and the sealing surfaces. A sliding between the sealing surfaces and the sealing elements can cause a displacement of the sealing elements from a correct sealing position, as mentioned above.

It is suitable that the sealing ring and the sliding skin are tensioned onto the sealing surface of the spigot end and in order to avoid the formation of folds and the like at the sliding skin this should have a tensioning of at least 20 % and preferably 25-30%.

In order to prevent that the pipe joint is demounted and the sliding skin slides in relation to the sealing ring in the established pipe joint it is suitable that the sliding skin has peripherially extending beads, grooves or the like. It is suitable that the sliding skin has the form of a flattened hose. In this case the hose can be provided with beads at its outer surface and be wave-shaped at its inner surface.

In order to improve the sealing effect at maintained compression the sealing skin can be manufactured from a softer elastic material than the sealing ring.

In the case that the sealing ring is not moulded into the pipe end portion at the sealing surface but only engages the sealing surface it is suitable that the pipe joint comprises a surface extending transversely in relation to the sealing surfaces, the sealing ring engaging said surface so as to be defined in relation to its position with regard to the sealing surface when the sealing surfaces are introduced one into the other.

The invention shall in the following be described with reference to the accompanying drawings.

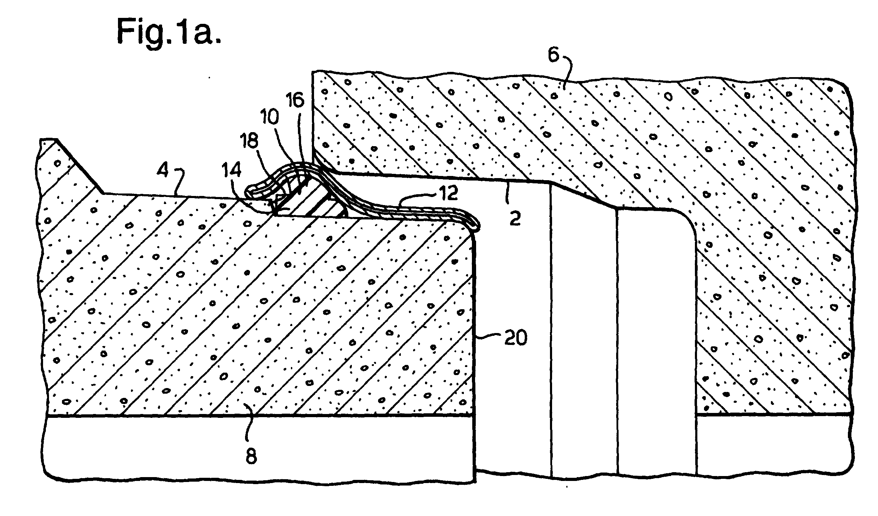

Fig. 1a shows an embodiment of a sealing device according to the invention prior to the forming of a pipe joint in which the sealing device is included.

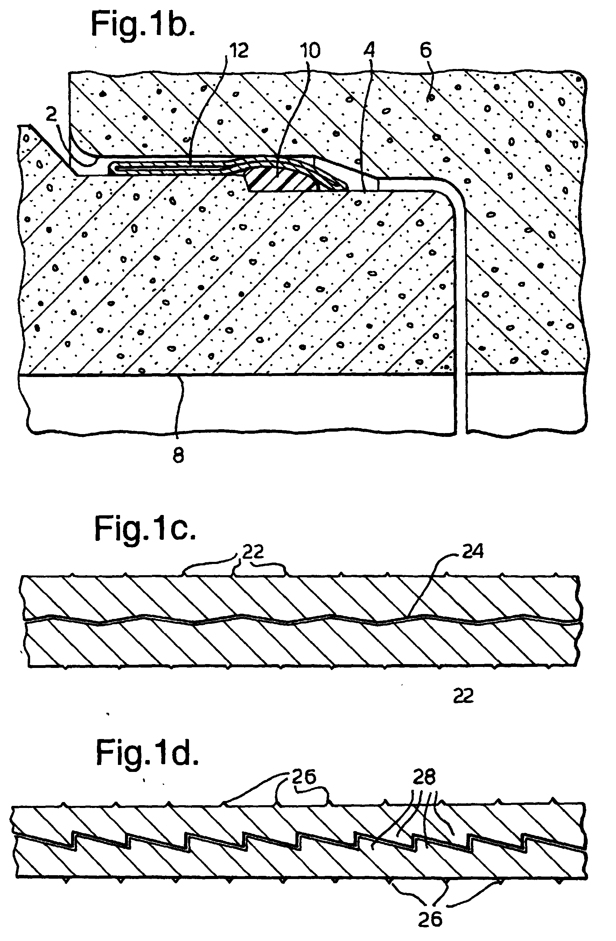

Fig. 1b shows the sealing device according to Fig. 1a subsequently to the establishment of the pipe joint.
Fig. 1c and Fig. 1d show on an enlarged scale two different embodiments of flattened hoses included in sealing devices according to the invention.

The sealing device according to the invention shown in Fig. 1a comprises two substantially cylindrical surfaces 2 and 4. The sealing surface 2 is provided at the inner surface of a socket 6 arranged at the end portion of a concrete pipe, while the sealing surface 4 is provided at the outer surface of a spigot end 8 arranged at the end portion of a second concrete pipe. The spigot end 8 is introducable into the socket 6 for providing a pipe joint between the two pipes. The sealing device comprises also two sealing elements connected with each other, namely a sealing ring 10 and sliding skin 12 connected therewith, the sealing ring 10 and the sliding skin 12 constituting separate elements. The sealing ring 10 has a retainer portion 14 connected with the sealing surface 4 and a sealing portion 16 connected with the retainer portion 14. The retainer portion 14 has a side surface which engages a shoulder surface 18 extending transversely in relation to the sealing surface 4. The shoulder surface 18 has the object of preventing that the sealing ring 10 is dispaced in relation to the sealing surface at the pipe jointing, i.e. when the spigot end 8 is introduced into the socket 6.

The sliding skin 12 has the form of a flattened hose which is positioned above the sealing ring 10 and therefrom extends into engagement with the sealing surface 4 at opposite sides of the sealing ring 10. In the position shown in Fig. 1a, i.e. the position prior to the pipe jointing, the flattened hose 12 extends along the sealing surface 4 up to the end surface 20 of the spigot end 8. The flattened hose 12 contains a sliding agent reducing the friction when the layers of the flattened hose slide against each other.

The sealing ring 10 and the sliding skin 12 are tensioned onto the sealing surface 4 of the spigot end 8, the sealing ring having a tensioning of for example 10% while the sliding skin 12 has a tensioning of for example 25-30%. This tensioning prevents that the sliding skin 12 forms folds and the like which may obstruct the pipe jointing, for example by causing positional changes.

It is suitable that the sliding skin 12 is manufactured from a softer elastic material than the sealing ring 10. This provides for an improved sealing of rough surfaces in the socket while the compression is maintained. For example the sliding skin can have a hardness of 20° Sh and the sealing ring 10 can have a hardness of 30° Sh.

At the pipe jointing, i.e. when the spigot end 8 is introduced into the socket 6, the sealing surface 2 of the socket 6 engages one of the layers of the flattened hose 12 while the other layer of the flattened hose engages the sealing ring 10 and the other sealing surface 4. Thus, the sliding takes place inside the flattened hose 12 while the engagement between the sealing elements 10 and 12 and the sealing surfaces 2 and 4 takes place without sliding.

Subsequently to the establishment of the pipe joint the sealing surfaces 2 and 4, the sealing ring 10 and the flattened sliding hose 12 take the position shown in Fig. 1b, in which position the sealing ring 10 and the flattened hose 12 are compressed between the sealing surfaces 2 and 4 while engaging each other. The sliding agent in the flattened hose 12 provides also for a movability in the peripheral direction of the compressed sealing device which provides for a uniform compression thereof.

In Fig. 1c there is shown on an enlarged scale a modified embodiment of the sliding skin constituted by a flattened hose. In this embodiment the flattened hose has outer peripheral beads 22 and an inner wave-shaped surface 24. The beads 22 and the wave-shaped surface 24 provide that sliding between the flattened hose and the sealing ring is obstructed and that also sliding between the layers of the flattened hose in the finished joint is obstructed. This provides that displacement of the sealing surfaces from the position in which the joint is provided is also prevented.

In Fig. 1d there is on an enlarged scale shown a further modified embodiment of a sliding skin formed has a flattened hose. Also in this embodiment the flattened hose has outer peripheral beads 26 while the inner surface of the hose has teeth 28 formed as half-arrows. The design of the teeth 28 provides that the pipe jointing can take place without being stopped by the teeth 28 while the teeth efficiently prevents displacement of the sealing surfaces from the position in which the joint is provided.

The sealing device according to the invention can be modified within the scope of the following claims.

## Claims

1. A sealing device for pipes comprising two sealing surfaces (2,4) provided at the end portions of two pipes, the sealing surfaces being axially introducable one into the other for providing a pipe joint in which one sealing surface surrounds the other sealing surface for constituting a substantially cylindrical sealing space and further comprising elastic material sealing elements (10, 12) compressed in the sealing space between the sealing surfaces, **characterized** in that the sealing elements constitute separate elements, a sealing ring (10) and a sliding skin (12), the sealing ring (10) being compressed between one sealing surface (4) and the sliding skin (12) in the established pipe joint.

2. A sealing device as claimed in claim 1, **characterized** in that the pipe end portions are constituted by a socket (6) and a spigot end (8) on which the sealing surfaces (2, 4) are provided and that the sealing ring (10) and the sliding skin (12) are prior to the axial introduction of the sealing surfaces (2, 4) one into the other positioned on the sealing surface (4) of the spigot end (8).

3. A sealing device as claimed in claim 2, **characterized** in that the sealing ring (10) and the sliding skin (12) are tensioned onto the sealing surface (4) of the spigot end (8).

4. A sealing device as claimed in claim 3, **characterized** in that the sliding skin (12) is positioned on the sealing surface (4) of the spigot end (8) with a tensioning of at least 20%.

5. A sealing device as claimed in claim 3 or 4, **characterized** in that the sealing ring (10) is positioned on the sealing surface (4) of the spigot end (8) with a tensioning of at least 10%.

6. A sealing device as claimed in any of the preceding claims, **characterized** in that the sliding skin (12) has the form of a flattened hose.

7. A sealing device as claimed in any of the preceding claims, **characterized** in that the sliding skin has at its outer and/or inner surface projecting portions, for example teeth (28) or beads (22), or is of wave-shape (24) so as to obstruct displacement of the sealing surfaces from the position for constituting the pipe joint.

8. A sealing device as claimed in any of the preceding claims, **characterized** in that the pipe joint comprises a shoulder surface (18) extending transversely in relation the sealing surfaces (2, 4) and that the sealing ring (10) engages the shoulder surface (18) for defining the position of the sealing ring (10) in relation to the sealing surface (4) at the axial introduction of the sealing surfaces one into the other.
